# FASCICULE DE BREVET EUROPEEN

(11) **EP 1 877 467 B1**
(45) Date de publication et mention de la délivrance du brevet: **17.04.2019**
(21) Numéro de dépôt: 06709291.6
(22) Date de dépôt: 10.02.2006
(51) Int. Cl.: C08G 81/02, C08J 7/04

(54) **UTILISATION DE COMPOSITIONS THERMOPLASTIQUES POUR LA PROTECTION THERMIQUE DE SUBSTRATS**
VERWENDUNG VON THERMOPLASTISCHEN ZUSAMMENSETZUNGEN ZUM THERMISCHEN SCHUTZ VON SUBSTRATEN
USE OF THERMOPLASTIC COMPOSITIONS FOR THE THERMAL PROTECTION OF SUBSTRATES

(30) Priorité: 11.02.2005 FR 0501400
(43) Date de publication de la demande: 16.01.2008
(73) Titulaire: ARKEMA FRANCE, 92700 Colombes (FR)
(72) Inventeur: BAUMERT, Martin, D-69221 DOSSENHEIM (DE); FLAT, Jean-Jacques, F-27170 Goupillères (FR); AMOUROUX, Nicolas, F-27300 Valailles (FR)
(74) Mandataire: Kling, Simone
(86) Numéro de dépôt international: PCT/FR2006/000306
(87) Numéro de publication internationale: WO 2006/085007

(56) Documents cités:
- EP-A- 1 156 080
- EP-A- 1 449 885
- EP-A1- 1 459 885
- WO-A-02/28959

## Description

La présente invention se rapporte à l'utilisation d'une composition thermoplastique sous forme nanostructurée, constituée essentiellement d'un copolymère éthylénique fonctionnel greffé à blocs polyamides pour la protection thermique de divers substrats ou l'obtention de produits ou pièces présentant une stabilité thermique à température élevée.

Il est décrit dans le document WO 02/28959 un copolymère greffé à blocs polyamides sur un tronc en polyoléfine qui est choisi parmi les copolymères éthylène/ anhydride maléique et éthylène/(méth)acrylate d'alkyle/anhydride maléique, formant un alliage co-continu nanostructuré; cela confère à ce copolymère des propriétés thermo-mécaniques exceptionnelles, qui sont maintenues en redispersant ce copolymère greffé dans des polyoléfines souples telles que les polymères souple de l'éthylène.

De tels mélanges trouvent des applications comme adhésifs, films, bâches, produits calandrés, câbles électriques ou poudres pour des procédés de moulage d'objets ("slush molding").

Dans l'état actuel de la technique, les produits thermoplastiques utilisés pour améliorer la stabilité et la tenue thermique sont des polymères tels que des élastomères thermoplastiques (par exemple Santoprene® d'Exxon, qui comprend une matrice en polypropylène(PP) dans laquelle est dispersé un copolymère éthylène/propylène/diène (EPDM)), des polymères chlorés (Sunprene® de ARKEMA) et des «super»thermoplastiques vulcanisés (Super TPV) (par exemple du type ETPV de DuPont et TPSiV de Dow Corning Multibase).

La demanderesse a réussi à définir le domaine de composition (polyoléfines/polyamide), combinant la flexibilité des polyoléfines avec la tenue thermique des polyamides, ainsi que le type et le taux des stabilisants pour obtenir des produits qui montrent une excellente stabilité et tenue thermique au delà de 150°C et même au delà de 200 °C. Les propriétés mécaniques sont peu modifiées après un vieillissement jusqu'à cette température.

La présente invention concerne l'utilisation d'une composition thermoplastique sous forme nanostructurée, composée essentiellement d'un copolymère greffé à blocs polyamides constitué d'un tronc en polyoléfine choisi parmi les copolymères éthylène-anhydride maléique et éthylène-(méth)acrylate d'alkyle-anhydride maléique, et d'au moins un greffon en polyamide, pour la protection thermique à une température supérieure à 150°C d'un substrat, caractérisée en ce qu'il s'agit de tubes ou tuyaux pour lignes de transfert de fluides comprenant une couche interne en polyamide type PA111 et/ou pA12 et une couche extérieure formée de la composition thermoplastique.

Selon l'invention, le tronc en polyoléfine est un terpolymère éthylène/(méth)acrylate d'alkyle/anhydride maléique.

Selon l'invention, les greffons sont des homopolymères constitués de restes de caprolactame, d'acide amino-11-undecanoïque ou de dodecalactame ou des copolyamides constitués de restes choisis parmi au moins deux des trois monomères précédents.

De préférence, les greffons polyamides sont du polyamide 6 monoNH2 ou du copolyamide 6/11 monoNH2, et ont une masse molaire comprise entre 1000 et 5000 g/mole.

En outre, les revêtements obtenus par dépôt de la composition thermoplastique selon l'invention sont appropriés comme couche protectrice thermique tant pour des supports ou substrats souples ou flexibles que rigides.

Par support ou substrat on entend tout type de matériau polymérique synthétique (thermoplastique ou thermodurcissable), ou naturel d'origine minérale ou végétale, ainsi que des matériaux métalliques.

La présente invention concerne l'utilisation de la composition thermoplastique de l'invention pour revêtir un substrat qui est souple et réalisé en polyamide, en particulier du type PA11 ou PA12.

Selon l'invention, la couche de revêtement est déposée par coextrusion sur la couche de substrat, en particulier pour l'obtention de tubes ou tuyaux.

En particulier, ces tubes ou tuyaux trouvent une application préférée dans les lignes de transfert de fluides, en particulier les tubes pour essence de type bi-couches, comprenant une couche interne de polyamide type PA11 et/ou PA12 et une couche extérieure formée de la composition thermoplastique.

Les propriétés originales et avantages de l'invention par rapport à l'état actuel de la technique sont :
- la structure des alliages de l'invention (la combinaison de la flexibilité d'une polyoléfine et la tenue thermique d'un polyamide est assurée par une structure cocontinue, stabilisée grâce à la nanostructuration),
- la combinaison de la stabilité thermique, la stabilité à l'hydrolyse et la transformabilité thermoplastique,
- la structure bi-couches qui peut être faite en une seule étape par coextrusion, sans couche de liant entre celles-ci.

Les avantages peuvent être résumés ainsi :
→ par rapport aux élastomères thermoplastiques(TPE) et polymères chlorés(PVC) :

| | TPE/PVC | Composition selon l'invention |
|---|---|---|
| Processabilité (extrusion de tube) | Vitesse basse | Vitesse élevée |
| Tenue à l'hydrolyse | <150 °C | >150°C |
| Tenue à la chaleur | <150 °C | >150°C |
| Couche d'adhésion | nécessaire (pour PA et PE) | Pas de liant nécessaire pour PA(polyamide), PP(polypropylène), PE(polyéthylène) |

→ par rapport aux « super » thermoplastiques vulcanisés :

| | ETPV | Composition selon l'invention |
|---|---|---|
| | matrice Copolyester + éthylène acrylate réticulé | |
| Processabilité (extrusion de tube) | Faible vitesse | Vitesse élevée |
| Tenue à l'hydrolyse | <100°C | >150°C |
| Couche d'adhésion | nécessaire (pour PA et PE) | Pas de liant nécessaire pour PA, PP, PE |

Parmi les avantages dûs à ce recouvrement pour les tubes bi-couches, les propriétés d'allongement et de choc du tube gainé (avec un revêtement)sont supérieures à celle du tube seul :
- l'allongement dépasse 300% car le tube en PA n'a pas été en contact avec le calibre,
- la résistance au choc: les compositions thermoplastiques selon l'invention ayant une transition ductile fragile extrêmement basse (<-50°C en Choc entaillé) la résistance au choc est excellente.

Nous allons décrire de façon plus détaillée le constituant principal de la composition thermoplastique dont l'utilisation fait l'objet de la présente invention.

S'agissant du copolymère greffé à blocs polyamides il peut être obtenu par réaction d'un polyamide à extrémité amine avec les restes d'un monomère insaturé X fixé par greffage ou copolymérisation sur un tronc en polyoléfine.

Ce monomère X peut être par exemple un époxyde insaturé ou un anhydride d'acide carboxylique insaturé. L'anhydride d'acide carboxylique insaturé peut être choisi par exemple parmi les anhydrides maléique, itaconique, citraconique, allylsuccinique, cyclohex-4-ène-1,2-dicarboxylique, 4-méthylènecyclohex-4-ène-1,2-dicarboxylique, bicyclo(2,2,1)hept-5-ène-2,3-dicarboxylique, et x-méthylbicyclo(2,2,1)hept-5-ène-2,2-dicarboxylique. On utilise avantageusement l'anhydride maléique. On ne sortirait pas du cadre de l'invention en remplaçant tout ou partie de l'anhydride par un acide carboxylique insaturé tel que par exemple l'acide (meth)acrylique. Des exemples d'époxydes insaturés ont été cités plus haut.

S'agissant du tronc en polyoléfine, on definit une polyoléfine comme un homo polymère ou copolymère d'alpha oléfines ou de dioléfines, telles que par exemple, éthylène, propylène, butène-1, octène-1, butadiène. A titre d'exemple, on peut citer :
- les homo polymères et copolymères du polyéthylène, en particulier LDPE, HDPE, LLDPE(linear low density polyéthylène, ou polyéthylène basse densité lineaire), VLDPE(very low density polyéthylène, ou polyéthylène très basse densité) et le polyéthylène métallocène.
- les homopolymères ou copolymères du propylène.
- les copolymères éthylène/alpha-oléfine tels qu'éthylène/propylène, les

EPR(abréviation d'éthylène-propylene-rubber) et éthylène/propylène/diène (EPDM).
- les copolymères blocs styrène/éthylène-butène/styrène (SEBS), styrène/butadiène/styrène (SBS), styrène/isoprène/ styrène (SIS), styrène/éthylène-propylène/styrène (SEPS).
- les copolymères de l'éthylène avec au moins un produit choisi parmi les sels ou les esters d'acides carboxyliques insaturés tel que le (méth)acrylate d'alkyle (par exemple acrylate de méthyle), ou les esters vinyliques d'acides carboxyliques saturés tel que l'acétate de vinyle, la proportion de comonomère pouvant atteindre 40% en poids.

Avantageusement les troncs en polyoléfine sur lesquels sont attachés les restes de X sont des polyéthylènes greffés par X ou des copolymères de l'éthylène et de X qu'on obtient par exemple par polymérisation radicalaire.

S'agissant des polyéthylènes sur lesquels on vient greffer X on entend par polyéthylène des homo- ou copolymères.

A titre de comonomères, on peut citer :
- les alpha-oléfines, avantageusement celles ayant de 3 à 30 atomes de carbone. Des exemples ont été cités plus haut. Ces alpha-oléfines peuvent être utilisées seules ou en mélange de deux ou de plus de deux,
- les esters d'acides carboxyliques insaturés tels que par exemple les (méth)acrylates d'alkyle, les alkyles pouvant avoir jusqu'à 24 atomes de carbone, des exemples d'acrylate ou méthacrylate d'alkyle sont notamment le méthacrylate de méthyle, l'acrylate d'éthyle, l'acrylate de n-butyle, l'acrylate d'isobutyle, l'acrylate de 2-éthylhexyle,
- les esters vinyliques d'acides carboxyliques saturés tels que par exemple l'acétate ou le propionate de vinyle.
- les diènes tels que par exemple le 1,4-hexadiène.
- le polyéthylene peut comprendre plusieurs des comonomères précédents.

Avantageusement le polyéthylène qui peut être un mélange de plusieurs polymères, comprend au moins 50% et de préférence 75% (en moles) d'éthylène, sa densité peut être comprise entre 0,86 et 0,98 g/cm³. Le MFI (indice de viscosité à 190°C, 2,16 kg) est compris avantageusement entre 20 et 1000 g/10 min.

A titre d'exemple de polyéthylènes on peut citer :
- le polyéthylène basse densité (LDPE)
- le polyéthylène haute densité (HDPE)
- le polyéthylène linéaire basse densité (LLDPE)
- le polyéthylène très basse densité (VLDPE)
- le polyéthylène obtenu par catalyse métallocène,
- les élastomères EPR (éthylène - propylène - rubber)
- les élastomères EPDM (éthylène - propylène - diène)
- les mélanges de polyéthylène avec un EPR ou un EPDM
- les copolymères éthylène-(méth)acrylate d'alkyle pouvant contenir jusqu'à 60% en poids de (méth)acrylate et de préférence 2 à 40%.

Le greffage est une opération connue en soi.

S'agissant des copolymères de l'éthylène et de X c'est-à-dire ceux dans lesquels X n'est pas greffé il s'agit des copolymères de l'éthylène, de X et éventuellement d'un autre monomère pouvant être choisi parmi les comonomères qu'on a cité plus haut pour les copolymères de l'éthylène destinés à être greffés.

On utilise avantageusement les copolymères éthylène-anhydride maléique et éthylène - (méth)acrylate d'alkyle - anhydride maléique. Ces copolymères comprennent de 0,2 à 10 % en poids d'anhydride maléique, de 0 à 40 % et de préférence 5 à 40 % en poids de (méth)acrylate d'alkyle. Leur MFI est compris entre 5 et 100 (mesuré à 190°C sous une pression de 2,16 kg). Les (méth)acrylates d'alkyle ont déjà été décrits plus haut. La température de fusion est comprise entre 60 et 120°C.

Avantageusement il y a en moyenne au moins deux moles de X par chaîne attachées sur le tronc en polyoléfine et de préférence de 2 à 5. L'homme de métier peut déterminer facilement par analyse IRTF le nombre de ces moles X. Par exemple si X est l'anhydride maléique et la masse moléculaire en poids M_{w} = 95 000 g/mol du tronc en polyoléfine, on a trouvé que ceci correspondait à une proportion d'anhydride d'au moins 1,5 % en poids de l'ensemble du tronc de polyoléfine contenant X et de préférence de 2,5 à 4%. Ces valeurs associées à la masse des polyamides à terminaison amine déterminent la proportion de polyamide et de tronc dans le copolymère greffé à blocs polyamides.

S'agissant du polyamide à extrémité amine on entend par polyamide les produits de condensation :
- d'un ou plusieurs aminoacides, tels les acides aminocaproïques, amino-7-heptanoïque, amino-11-undécanoïque et amino-12-dodécanoïque d'un ou plusieurs lactames tels que le caprolactame, oenantholactame et lauryllactame ;
- d'un ou plusieurs sels ou mélanges de diamines telles l'hexaméthylène-diamine, la dodécaméthylènediamine, la métaxylylènediamine, le bis-p aminocyclohexylméthane et la triméthylhexaméthylène diamine avec des diacides tels que les acides isophtalique, téréphtalique, adipique, azélaïque, subérique, sébacique et dodécanedicarboxylique :
- ou des mélanges de plusieurs monomères ce qui conduit à des copolyamides.

On peut utiliser des mélanges de polyamides. On utilise avantageusement le PA 6, le PA 11, le PA 12, le copolyamide à motifs 6 et motifs 11 (PA 6/11), le copolyamide à motifs 6 et motifs 12 (PA 6/12), et le copolyamide à base de caprolactame, hexaméthylènediamine et acide adipique (PA 6/6-6). L'avantage des copolyamides est qu'on peut ainsi choisir la température de fusion des greffons.

Le degré de polymérisation peut varier dans de larges proportions, selon sa valeur c'est un polyamide ou un oligomère de polyamide. Dans la suite du texte on utilisera indifféremment les deux expressions pour les greffons.

Pour que le polyamide ait une terminaison monoamine il suffit d'utiliser un limiteur de chaîne de formule : 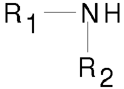 dans laquelle :
- R₁ est l'hydrogène ou un groupement alkyle linéaire ou ramifié contenant jusqu'à 20 atomes de carbone,
- R₂ est un groupement ayant jusqu'à 20 atomes de carbone alkyle ou alcenyle linéraire ou ramifié, un radical cycloaliphatique saturé ou non, un radical aromatique ou une combinaison des précédents. Le limiteur peut être par exemple la laurylamine ou l'oleylamine.

Avantageusement le polyamide à extrémité amine a une masse molaire comprise entre 1000 et 5000 g/mole et de préférence entre 2000 et 4000.

Les monomères amino-acides ou lactames préférés pour la synthèse de l'oligomère monoaminé selon l'invention sont choisis parmi le caprolactame, l'acide amino-11-undécanoïque ou le dodécalactame. Les limitateurs monofonctionnels de polymérisation préférés sont la laurylamine et l'oléylamine.

La polycondensation définie ci-dessus s'effectue selon les procédés habituellement connus, par exemple à une température comprise en général entre 200 et 300 °C, sous vide ou sous atmosphère inerte, avec agitation du mélange réactionnel. La longueur de chaîne moyenne de l'oligomère est déterminée par le rapport molaire initial entre le monomère polycondensable ou le lactame et le limitateur monofonctionnel de polymérisation. Pour le calcul de la longueur de chaîne moyenne, on compte habituellement une molécule de limitateur de chaîne pour une chaîne d'oligomère.

L'addition de l'oligomère monoaminé de polyamide sur le tronc de polyoléfine contenant X s'effectue par réaction d'une fonction amine de l'oligomère avec X. Avantageusement X porte une fonction anhydride ou acide, on crée ainsi des liaisons amides ou imides.

On réalise l'addition de l'oligomère à extrémité amine sur le tronc de polyoléfine contenant X de préférence à l'état fondu. On peut ainsi, dans une extrudeuse, malaxer l'oligomère et le tronc à une température généralement comprise entre 230 et 280 °C. Le temps de séjour moyen de la matière fondue dans l'extrudeuse peut être compris entre 15 secondes et 5 minutes, et de préférence entre 1 et 3 minutes. Le rendement de cette addition est évalué par extraction sélective des oligomères de polyamide libres c'est-à-dire ceux qui n'ont pas réagi pour former le copolymère greffé à blocs polyamides final.

La préparation de tels polyamides à extrémité amine ainsi que leur addition sur un tronc de polyoléfine contenant X est décrite dans les brevets US 3976720, US 3963799, US 5342886 et FR 2291225.

Les copolymères greffés à blocs polyamides utilisés dans les compositions thermoplastiques selon la présente invention sont caractérisés par une organisation nano-structurée avec des lamelles de polyamide d'épaisseur comprise entre 10 et 50 nanomètres.

Ces copolymères ont une très bonne résistance au fluage à des températures au moins égales à 80°C et pouvant aller jusqu'à 130°C, c'est à dire qu'ils ne présentent pas de rupture sous 25 kPa.

Les copolymères utilisés dans l'invention peuvent être préparés par mélange à l'état fondu dans des extrudeuses (mono ou bi-vis), des malaxeurs BUSS, des mélangeurs BRABENDER et en général les dispositifs habituels de mélange des thermoplastiques et de préférence les extrudeuses bi-vis.

Les compositions thermoplastiques utilisées selon l'invention peuvent comprendre aussi des agents fluidifiants tels que de la silice, de l'éthylène-bis -amide, du stéarate de calcium ou du stéarate de magnésium. Ils peuvent aussi comprendre des agents stabilisants thermiques, des antioxydants, des anti U.V., des charges minérales et des pigments de coloration.

Les compositions de l'invention peuvent être préparées en une étape dans une extrudeuse. Dans les premières zones on introduit le tronc contenant X (par exemple un copolymère éthylène-(meth)acrylate d'alkyle-anhydride maléique), le polyamide à extrémité amine puis quelques zones plus loin les additifs. On peut aussi introduire tous les ingrédients dans la première zone de l'extrudeuse.

### → DESCRIPTION D'EXEMPLES DE RÉALISATION DE L'INVENTION :

Trois compositions thermoplastiques A, B et C se présentant sous forme d'alliage co-continu nanostructuré sont réalisées à partir des composants suivants dont les teneurs en parties en poids sont présentées dans le tableau 1 ci-dessous :

**Tableau 1**

| | A | B | C |
|---|---|---|---|
| LOTADER 4700 | 80 | | |
| LOTADER 7500 | | 80 | |
| LOTADER3210 | | | 80 |
| PA 6 mono NH2 | 19 | 19 | 19 |
| Irgafos 168 | 0,5 | 0.5 | 0.5 |
| Irganox 1098 | 0,5 | 0.5 | 0.5 |

| | | | |
|---|---|---|---|
| Le Lotader 4700 ® de ARKEMA est un terpolymère éthylène-acrylate d'éthyle (29% en poids)-anhydride maléique (1.5% poids), ayant un MFI de 7 (g/10 min mesuré à 190°C sous une charge de 2.16kg, selon la norme ASTM D 1238). Le Lotader 7500 ® de ARKEMA est un terpolymère éthylène-acrylate d'éthyle (17.5% en poids)-anhydride maléique (2.9% poids), ayant un MFI de 70. Le Lotader 3210 ® de ARKEMA est un terpolymère éthylène-acrylate de butyle (6% en poids)-anhydride maléique (3% poids), ayant un MFI de 5. Le PA 6 mono NH2 a une masse moléculaire de 2500 g/mole, Irganox 1098 est un anti-oxydant de CIBA, Irgafos 168 est un agent stabilisant de CIBA. Ces composants sont introduits dans une extrudeuse bi-vis co-rotative de type LEISTRITZ ® LSM 306-34, ayant un profil de températures compris entre 240 et 280°C, le produit obtenu étant mis en sac après granulation. | | | |

### Extrusion des tubes

Différents tubes en mono et bi-couche ont été extrudés avec les compositions A et B. Pour le mono-couche un diamètre intérieur de 6mm et un diamètre extérieur de 8 mm a été choisi. Les tubes bi-couches sont réalisés en co-extrusion avec une couche intérieure en RILSAN® (type BESN NOIR P20 TL) d'ARKEMA, et une couche extérieure avec les compositions A et B, (chaque couche ayant une épaisseur de 1mm) et présentent les dimensions suivantes : diamètre intérieur de 6 mm, diamètre total extérieur de 10 mm.

### Résistance à l'hydrolyse

Les tubes monocouche (composition A) ont été vieillis dans un mélange eau/HAVOLINE XLC de TEXACO (éthylène glycol plus additifs) (50/50 en poids) et la variation des propriétés mécaniques après vieillissement pendant 1000 h dans ce mélange eau/Havoline à 130 °C sont mesurées à 23 °C ; un essai comparatif avec une composition de type Santoprene 8000 Rubber 8201-90, (commercialisé par Advanced Elastomer Systems) à base de polypropylène (PP) et d'un copolymère éthylène/propylène/diène (EPDM) a été aussi réalisé. Les résultats obtenus sont présentés dans le tableau 2 ci-après.

**Tableau 2**

| Vieillissement à 130°C Eau/Havoline | Composition A | | Comparatif : PP+EPDM | |
|---|---|---|---|---|
| Durée (h) | Contrainte à la rupture (MPa) | Allongement à la rupture (%) | Contrainte à la rupture (MPa) | Allongement à la rupture (%) |
| 0 | 8.3 | 467 | 6.5 | 315 |
| 1000 | 9.4 | 512 | 6.3 | 100 |

### Résistance au vieillissement thermique:

Les tubes monocouche réalisés avec la composition A ainsi qu'avec une composition PP+EPDM comme comparatif, ont été vieillis dans l'air à différentes températures et les variations des propriétés mécaniques mesurées à 23 °C sont regroupées dans les tableaux 3 et 4 ci-après :

**Tableau 3**

| Vieillissement à 150°C | Composition A | | Comparatif :PP+EPDM | |
|---|---|---|---|---|
| Durée (h) | Contrainte à la rupture (MPa) | Allongement à la rupture (%) | Contrainte à la rupture (MPa) | Allongement à la rupture (%) |
| 0 | 11,3 | 467 | 6.5 | 315 |
| 170 | 10.5 | 456 | 6.3 | 105 |
| 1000 | 10.2 | 432 | 3 | 20 |

**Tableau 4**

| Vieillissement à 180°C | Composition A | | Comparatif :PP+EPDM | |
|---|---|---|---|---|
| Durée (h) | Contrainte à la rupture (MPa) | Allongement à la rupture (%) | Contrainte à la rupture (MPa) | Allongement à la rupture (%) |
| 0 | 11,3 | 467 | 6.5 | 315 |
| 168 | 9.3 | 344 | (fondu) | (fondu) |

### Résistance au vieillissement dans l'huile:

Les tube monocouche (réalisés avec les compositions A, B et C) ont été vieillis selon la norme PSA/Renault D47 1924 (contact occasionnel) :
Ces tubes ainsi qu'un tube réalisé avec une composition à base de PP+EPDM (décrite ci-dessus) ont été mis en contact avec l'huile Elf Trophy DX 15 W40 pendant 15 secondes à 23 °C. Ensuite les tubes ont été placés dans une étuve ventilée à 155 °C pendant 16 h. Aucune modification apparente n'a pu être observée. C'est la raison pour laquelle les tubes ont été évalués selon la norme Volkswagen TL 524 35 (traction transversale).

Les résultats sont regroupés dans le tableau 5 suivant :

**Tableau 5**

| Allongement à la rupture % | composition C | composition A | composition B | Comparatif PP+EPDM |
|---|---|---|---|---|
| Initial | 456 | 451 | 473 | 314 |
| vieilli 16h 155°C | 404 | 479 | 465 | 102 |
| vieilli 16h 155°C après 15s contact d'huile | 337 | 392 | 315 | 111 |

Le vieillissement thermique n'a que peu ou pas d'influence sur les propriétés mécaniques des compositions A, B et C, contrairement à la composition à base de PP+EPDM.

### Structures bi-couches avec les compositions thermoplastiques nano-structurées selon l'invention comme couche externe protectrice thermique

Des tubes bicouches sont extrudrés et constitués d'une couche intérieure en RILSAN® (BESN NOIR P20TL) (épaisseur 1mm) et d'une couche extérieure(épaisseur1mm) avec les compositions A et B selon l'invention ; le diamètre intérieur des tubes est de 6 mm et le diamètre extérieur de 10 mm.

Les tubes ont été évalués selon le cahier des charges PSA D44 1959 (caoutchouc et plastiques - tenue au frottement mécanique), SAE J2303 («thermal effectiveness of sleeve insulation ») et les propriétés répondent aux spécifications.

## Revendications

1. Utilisation d'une composition thermoplastique sous forme nanostructurée, composée essentiellement d'un copolymère greffé à blocs polyamides constitué d'un tronc en polyoléfine choisi parmi les copolymères éthylène-anhydride maléique et éthylène-(méth)acrylate d'alkyle-anhydride maléique, et d'au moins un greffon en polyamide, pour la protection thermique à une température supérieure à 150°C d'un substrat, **caractérisée en ce qu'**il s'agit de tubes ou tuyaux pour lignes de transfert de fluides comprenant une couche interne en polyamide type PA11 et/ou PA12 et une couche extérieure formée de la composition thermoplastique.

2. Utilisation selon la revendication 1, **caractérisée en ce que** le tronc en polyoléfine est un terpolymère éthylène/(méth)acrylate d'alkyle/anhydride maléique.

3. Utilisation selon les revendications 1 et 2, **caractérisée en ce que** les greffons sont des homopolymères constitués de restes de caprolactame, d'acide amino-11-undecanoïque ou de dodecalactame ou des copolyamides constitués de restes choisis parmi au moins deux des trois monomères précédents.

4. Utilisation selon la revendication 3, **caractérisée en ce que** les greffons polyamides sont du polyamide 6 monoNH₂ ou du copolyamide 6/11 monoNH₂.

5. Utilisation selon les revendications 3 et 4, **caractérisée en ce que** les greffons polyamides ont une masse molaire comprise entre 1000 et 5000 g/mole.

6. Utilisation selon la revendication 5, **caractérisée en ce que** la couche de revêtement est déposée par coextrusion sur la couche de substrat.

7. Utilisation selon l'une des revendications 1 à 4, **caractérisée en ce que** le substrat est rigide.

## Patentansprüche

1. Verwendung einer thermoplastischen Zusammensetzung in nanostrukturierter Form, die im Wesentlichen aus einem Pfropfcopolymer mit Polyamidblöcken aus einer Polyolefin-Hauptkette, die aus Ethylen-Maleinsäureanhydrid- und Ethylen-Alkyl(meth)-acrylat-Maleinsäureanhydrid-Copolymeren ausgewählt ist, und mindestens einem Polyamid-Pfropfanteil besteht, zum thermischen Schutz eines Substrats bei einer Temperatur über 150 °C, **dadurch gekennzeichnet, dass** es sich um Rohre und Schläuche für Fluidtransferleitungen mit einer Innenschicht aus Polyamid vom PA11- und/oder PA12-Typ und einer Außenschicht aus der thermoplastischen Zusammensetzung handelt.

2. Verwendung nach Anspruch 1, **dadurch gekennzeichnet, dass** es sich bei der Polyolefin-Hauptkette um ein Ethylen-Alkyl(meth)acrylat-Maleinsäureanhydrid-Terpolymer handelt.

3. Verwendung nach den Ansprüchen 1 und 2, **dadurch gekennzeichnet, dass** es sich bei den Pfropfanteilen um Homopolymere aus Caprolactam-, 11-Aminoundecansäure- oder Dodecalactam-Resten oder Copolyamide aus Resten, die aus mindestens zwei der drei vorstehenden Monomere ausgewählt sind, handelt.

4. Verwendung nach Anspruch 3, **dadurch gekennzeichnet, dass** es sich bei den Polyamid-Pfropfanteilen um Mono-NH₂-polyamid 6 oder Mono-NH₂-copolyamid 6/11 handelt.

5. Verwendung nach den Ansprüchen 3 und 4, **dadurch gekennzeichnet, dass** die Polyamid-Pfropfanteile ein Molekulargewicht zwischen 1000 und 5000 g/mol aufweisen.

6. Verwendung nach Anspruch 5, **dadurch gekennzeichnet, dass** die Überzugsschicht durch Coextrusion auf der Substratschicht abgeschieden wird.

7. Verwendung nach einem der Ansprüche 1 bis 4, **dadurch gekennzeichnet, dass** das Substrat steif ist.

## Claims

1. Use of a thermoplastic composition in nanostructured form, mainly composed of a graft copolymer having polyamide blocks formed from a polyolefin backbone, chosen from ethylene/maleic anhydride and ethylene/alkyl (meth)acrylate/maleic anhydride copolymers, and from at least one polyamide graft, for the thermal protection, at a temperature above 150°C, of a substrate, **characterized in that** it relates to tubes or pipes for fluid transfer lines comprising an inner layer of PA-11 and/or PA-12 type polyamide and an outer layer formed from the thermoplastic composition.

2. Use according to Claim 1, **characterized in that** the polyolefin backbone is an ethylene/alkyl (meth)acrylate/maleic anhydride terpolymer.

3. Use according to Claims 1 and 2, **characterized in that** the grafts are homopolymers formed from residues of caprolactam, 11-aminoundecanoic acid or dodecalactam or copolyamides formed from residues chosen from at least two of the previous three monomers.

4. Use according to Claim 3, **characterized in that** the polyamide grafts are mono-NH₂-terminated PA-6 polyamide or mono-NH₂-terminated PA-6/11 copolyamide.

5. Use according to Claims 3 and 4, **characterized in that** the polyamide grafts have a molecular weight between 1000 and 5000 g/mol.

6. Use according to Claim 5, **characterized in that** the coating layer is deposited by coextrusion onto the substrate layer.

7. Use according to one of Claims 1 to 4, **characterized in that** the substrate is rigid.
